# EUROPÄISCHE PATENTSCHRIFT

(11) **EP 0 841 312 B1**
(45) Veröffentlichungstag und Bekanntmachung des Hinweises auf die Patenterteilung: **13.08.2003**
(21) Anmeldenummer: 97119389.1
(22) Anmeldetag: 06.11.1997
(51) Int. Cl.: C05F 17/00, C05F 11/04, C05C 9/00, C05F 11/00

(54) **Verfahren zur Herstellung von Torfersatz, sowie eines vorzugsweise hierfür geeigneten Kompoststarters**
Process for manufacturing substitute peat and compost starter adapted to this process
Procédé de préparation d'un succédané de tourbe et initiateur de compostage adapté à ce procédé

(30) Priorität: 09.11.1996 DE 19646312
(43) Veröffentlichungstag der Anmeldung: 13.05.1998
(73) Patentinhaber: Fleschhut, Ursula, 86756 Reimlingen (DE)
(72) Erfinder: Fleschhut, Michael, 86154 Augsburg (DE)
(74) Vertreter: Munk, Ludwig, Dipl.-Ing.

(56) Entgegenhaltungen:
- DE-A- 4 401 278
- DE-A- 4 436 787
- FR-A- 2 184 463
- FR-A- 2 224 422
- US-A- 2 004 706
- US-A- 2 969 279
- US-A- 3 561 943
- US-A- 5 501 718

## Beschreibung

Die Erfindung betrifft ein Verfahren zur Herstellung von Torfersatz, sowie eines hierfür geeigneten Kompoststarters.

Torf ist sogenannter Rohhumus, der in der Bodenpflege und -kultivierung zur Bodenverbesserung etc. Verwendung finden kann. Natürlicher Torf steht nicht unbegrenzt zur Verfügung. Zudem erfordert der Abbau der natürlichen Torf-Lagerstätten starke Eingriffe in die Umwelt und kann zu Störungen der Ökologie führen. Außerdem ist natürlicher Torf in der Regel sauer, was einer schnellen Vermehrung der Bodenmicroorganismen entgegenwirkt und für viele Pflanzen unzuträglich ist.

DE-A 44 01 278 beschreibt ein Verfahren zum Herstellen eines Torfersatzes, wobei in einem ersten Verfahrensschritt Biomasse durch Zerkleinern von Nutzpflanzen wie vorzugsweise von Staudenknöterich bereitgestellt wird und sich eine Schnellfermentierung der im ersten Verfahrensschritt erhaltenen Biomasse unter Zugabe von Kompostierhilfsstoffen anschließt. Die Fermentierung wird beendet, wenn das mittels des beschriebenen Verfahrens hergestellte Kultursubstrat einen Gehalt an Nitrat von < 500 mg/kg, an Nitrit von 0 ppm, an Sulfid von 0 ppm, an Ammonium von 0,25 bis 2,0 ppm und einen pH-Wert von 7 bis 8 aufweist.

US-A 2,004,706 beschreibt ein Verfahren zur Herstellung von Düngemitteln aus Sägemehl mittels Impfen dieses Materials mit Pilzen und Fermentieren desselben bis zu einer Temperatur von 60 °C bis 65 °C.

FR-A 2.224.422 offenbart, ein Ersatzsubstrat zur Züchtung von Champignons herzustellen, indem man unter Zugabe von Harnstoff fast ausschließlich rindenhaltiges Ausgangsmaterial 4 Tage lang bei 40 °C kompostieren läßt.

Hiervon ausgehend ist es daher die Aufgabe der vorliegenden Erfindung, einen Torfersatz sowie die hierfür erforderlichen und besonders zu bevorzugenden Komponenten herzustellen, wobei obige Nachteile vermieden sind.

Die Lösung dieser Aufgabe bezüglich Torfersatz ist im Anspruch 1 angegeben; sie beinhaltet ein Verfahren, bei dem als Ausgangsmaterial im wesentlichen zerkleinertes Holz Verwendung findet, in das Harnstoff in einem Mengenverhältnis von etwa 2 kg/m³ und ein erster Starter in einem Volumenverhältnis von 10 vol% eingebracht werden, wonach diese erste Mischung eine kürzere Zeit gelagert wird, und bei dem anschließend in die erste Mischung ein zweiter Starter in einem Mengenverhältnis von etwa 25 g/m³ des Ausgangsmaterials eingebracht wird, wonach diese zweite Mischung anschließend eine längere Zeit kompostiert wird, wobei der erste Starter ein Pilzsubstrat bestehend aus zerkleinertem, mit dem Mycel von vorwiegend Primärzersetzerpilzen durchwachsenem Zellulosematerial und der zweite Starter ein Kompoststarter ist; beide Starter sind ebenfalls im Anspruch 1 spezifiziert.

Diese Maßnahmen ermöglichen eine industrielle Herstellung von Torfersatz, wobei der Ausgangsstoff in Form von zerkleinertem Holz ein Abfallprodukt darstellt, dessen schnelle Beseitigung vielfach erwünscht ist. Zudem ist es hier in vorteilhafter Weise möglich, im fertigen Produkt eine neutrale oder sogar basische Atmosphäre zu erzeugen. Das erfindungsgemäße Endprodukt begünstigt daher im Gegensatz zu echtem Torf eine schnelle Vermehrung der Microorganismen im Boden und führt zu einer starken Bodenlockerung und -durchlüftung sowie zu natürlicher Krümelstruktur. Die Erfindung leistet damit nicht nur einen Beitrag zum Umweltschutz, sondern ermögilcht eine schnelle und zuverlässige Bodenverbesserung bzw. -gesundung und gewährleistet damit insgesamt eine ausgezeichnete Wirtschaftlichkeit.

Zur Herstellung des zweiten Starters wird eine Mischung von jeweils etwa 20 vol% Pferdemist, 50 vol% Grünmasse, 10 vol% Fallaub, 10 vol% Lehm, 10 vol% Pilzsubstrat von Schritt a) gemäß Anspruch 1, sowie Urgesteinsmehl mit einem Mengenanteil von 5 bis 10 kg/m³ als Ausgangsmaterial Verwendung finden, das feucht gehalten und kompostiert wird, bis folgende Werte in etwa erreicht werden: pH-Wert = 7 bis 8; NH₄ [Ammonium]]-Gehalt ∼ 2mg/kg; NO₃ [Nitrat]-Gehalt = 100 bis 350 mg/kg; NO₂ [Nitrit]-Gehalt = 0; H₂S [Sulfid]-Gehalt = 0; Wasserstoffgehalt < Sauerstoffgehalt; Gesamtsalzgehalt < = 600 mg/kg des vorliegenden Materials. Temperatur, CO₂ - gehalt und Sauerstoffgehalt werden laufend überwacht, wobei für Temperatur und CO₂ - gehalt vorzugsweise obere Grenzwerte von ∼65°C bzw. 8 - 10 vol % der vorhandenen Gase und für den Sauerstoff vorzugsweise ein unterer Grenzwert von 11 vol % der vorhandenen Gase eingehalten werden.

Ein derartig hergestelltes Material besitzt in vorteilhafter Weise etwa dieselben Qualitäten wie Nilschlamm und ergibt daher einen ausgezeichneten Torfersatz, der aber auch als regulärer Kompoststarter eingesetzt werden kann.

Zweckmäßig wird der in vorstehend angegebener Weise gewonnene Torfersatz bzw. Kompoststarter bei etwa 35° C getrocknet und anschließend gemahlen. Das so gewonnene Torfersatz-bzw. Kompoststarterpulver kann in vorteilhafter Weise in Wasser suspendiert werden, was eine einfache Weiterverarbeitung ermöglicht.

Zur Herstellung des den ersten Starter bildenden Pilzsubstrats wird Stroh, vorzugsweise Getreidestroh zerkleinert, angefeuchtet und mit vorwiegend Primärzersetzerpilzen geimpft, wonach dieses Material in lufdurchlässige Säcke abgefüllt bei einer Temperatur von 25 bis 30° C und einer Luftfeuchtigkeit von 60 bis 65% gehalten wird, bis das ganze Stroh mit Pilzmycel durchwachsen ist. Vielfach ist es günstig, wenn neben Primärzersetzerpilzen auch Sekundärzersetzer- und Folgezersetzerpilze zugesetzt werden. Das so gewonnene Pilzsubstrat führt in vorteilhafter Weise zu einer starken Beschleunigung des Verfahrensablaufs bei der erfindungsgemäßen Herstellung von Torfersatz.

Die Kompostierung des erfindungsgemäßen Torfersatzes wird zweckmäßig beendet, wenn innerhalb der Kompostmiete folgende Werte in etwa erreicht sind: pH-Wert = 7 bis 8; NH₄ [Ammonium]]-Gehalt = 2mg/kg; NO₃ [Nitrat]-Gehalt = 100 bis 350 mg/kg; NO₂ [Nitrit]-Gehalt = 0; H₂S [Sulfid]-Gehalt = 0;
Wasserstoffgehalt < Sauerstoffgehalt;
Gesamtsalzgehalt ≤ # 600 mg/kg des vorliegenden Materials. Temperatur, CO₂ - gehalt und Sauerstoffgehalt werden laufend überwacht, wobei für Temperatur und CO₂ - gehalt obere Grenzwerte von ∼65°C bzw. 8 - 10 vol % der vorhandenen Gase und für den Sauerstoff ein unterer Grenzwert von 11 vol % der vorhandenen Gase eingehalten werden.

Hierdurch ergibt sich ein toxikologisch völlig unbedenkliches, sehr schnell in Humus umsetzbares Produkt,das Boden und Dünger mobilisiert und eine hohe bodengesundende Wirkung hat.

Dieses Endprodukt kann zweckmäßig zu Briketts gepresst werden. Dies ermöglicht eine einfache Lagerhaltung sowie einen einfachen Transport.

Weitere vorteilhafte Ausgestaltungen und zweckmäßige Fortbildungen der übergeordneten Maßnahmen sind in den Unteransprüchen angegeben und der nachstehenden Beispielsbeschreibung entnehmbar.

Das erfindungsgemäße Verfahren ist mehrstufig. Zunächst sind Vorprodukte in Form des ersten und zweiten Starters herzustellen, bevor das eigentliche Verfahren beginnen kann. Zunächst wird die Herstellung des als zweiter Starter benötigten Kompoststarters beschrieben.

Zur Herstellung dieses Kompoststarters wird zunächst eine homogene Mischung von 20 vol% Pferdemist mit Stroheinstreu, 50 vol% Grünmasse, vorzugsweise Luzerne, 10 vol% Fallaub, vorzugsweise von der Buche, 10 vol% Lehm, vorzugsweise der Qualität sU-sT, 10 % Pilzsubstrat auf Strohbasis, das vorwiegend Primärzersetzerpilze, wie Weißfäule-, Braunfäule-, und Moderfäulepilze und in geringeren Mengen Sekundär- und Folgezersetzerpilze enthält und gemäß Schritt a) von Patentanspruch 1 erhältlich ist, und von Urgesteinsmehl mit einem Mengenanteil von 5 bis 10 kg/m³ hergestellt. Die Herstellung des erwähnten Pilzsubstrats wird außerdem weiter unten noch beschrieben. Die genannte Mischung soll feucht sein. Der optimale Feuchtigkeitsgrad kann durch Faustprobe ermittelt werden. Der optimale Feuchtigkeitsgrad ist erreicht, wenn bei kräftigem Zusammenpressen des Materials mit der Hand zwischen den Fingern nur wenig Feuchtigkeit austritt, vorzugsweise jeweils ein Tropfen zwischen zwei Fingern.

Die vorstehend beschriebene Mischung wird längere Zeit, je nach Witterung und Jahreszeit 3 bis 6 Monate, kompostiert. Hierzu wird vorzugsweise eine Dreiecksmiete angelegt. Diese kann zum Schutz gegen Witterungseinflüsse zweckmäßig mit einem Schutzvlies abgedeckt werden, was eine Verfahrensdurchführung im Freien begünstigt. Während der Kompostierung wird das Material durch Zugabe von Wasser weiter feucht gehalten. Der Feuchtigkeitsgrad entspricht dem oben beschriebenen Feuchtigkeitsgrad und kann ebenfalls durch Faustprobe festgestellt werden. Außerdem werden während der Kompostierungszeit die Temperatur, der Sauerstoffgehalt und der Kohlendioxid-Gehalt ständig, d.h. täglich mindestens einmal, kontrolliert. Die oberen Grenzwerte liegen für die Temperatur bei 65°, und für Kohlendioxid bei 8 bis 10 vol % der in der Miete vorhandenen Gase. Der untere Grenzwert für Sauerstoff liegt bei 11 Vol % der in der Miete vorhandenen Gase. Ein höherer Sauerstoffgehalt von etwa 20 - 21 vol % ist besonders zweckmäßig und für das Wachstum der Microorganismen günstig. Wenn die Gefahr besteht, daß die genannten Grenzwerte unter- bzw. überschritten werden, wird die Miete gewendet.

Die Kompostierung wird bevorzugt beendet, wenn obige Grenzwerte eingehalten und zudem folgende Werte ca. erreicht sind: pH-Wert = 7 bis 8; NH₄ [Ammonium]-Gehalt = 2mg/kg; NO₃ [Nitrat]-Gehalt = 100 bis 150 mg/kg; NO₂ [Nitrit]-Gehalt = 0; H₂S [Sulfid]-Gehalt = 0; Wasserstoffgehalt < Sauerstoffgehalt;
Gesamtsalzgehalt ≤ 600 mg/kg des vorhandenen Materials.

Die Werte für Temperatur, Kohlendioxid und Sauerstoff werden laufend, die anderen Werte werden ab und zu, jedenfalls gegen Ende der anzunehmenden Kompostierungszeit ebenfalls überwacht. Sobald die genannten Werte erreicht sind, liegt brauchbares Kompostmaterial vor und kann die Kompostierung beendet werden. Das Verhältnis von Wasserstoff zu Sauerstoff kann durch Ionendruckmessung nach der Redox-methode ermittelt werden.

Das fertige Kompostmaterial wird vorzugsweise bei etwa 35° C getrocknet und anschließend fein vermahlen. Das so hergestellte Pulver kann mit Mikroalgen angereichert werden. Dieses Material kann zur Verwendung als regulärer Kompoststarter in Beutel verpackt und in den Handel gebracht werden. Bei der Herstellung von erfindungsgemäßem Torfersatz wird dieses Material -wie erwähnt- als zweiter Starter verwendet.

Daneben wird ein erster Starter benötigt, dessen Herstellung nachstehend beschrieben wird. Dieser erste Starter besteht aus einem Pilzsubstrat. Um dieses herzustellen wird Stroh, vorzugsweise Getreidestroh, zerkleinert, vorzugsweise fein gehäckselt, angefeuchtet und mit Pilzen in Form von vorwiegend Primärzersetzerpilzen, wie Weißfäule-, Braunfäule- und Moderfäulepilzen sowie mit geringeren Mengen Sekundär- und Folgezersetzerpilzen geimpft. Dieses geimpfte Stroh wird in Säcke aus luftdurchlässigem Material, wie textilem Material, abgefüllt und in einem Klimaraum bei einer Temperatur von 25 bis 30° C und einer Luftfeuchtigkeit von 60 bis 65° C gehalten, bis das ganze Stroh mit Pilzmycel durchwachsen ist. Die Verpackung in Säcken ermöglicht ein vollständiges Durchwachsen des Strohs mit Pilzmycel.

Das vorstehend im Zusammenhang mit der Herstellung des Kompoststarters beziehungsweise des zweiten Starters erwähnte Pilzsubstrat wird genauso hergestellt, wie das vorstehend beschriebene Pilzsubstrat zur Bildung des ersten Starters. Dieser geht daher auch als Komponente mit 10 vol% in die Herstellung des zweiten Starters ein.

Die in oben jeweils beschriebener Weise hergestellten Starter in Form von erstem Starter und zweitem Starter werden bei der Herstellung von Torfersatz in das Grundmaterial eingearbeitet. Als Ausgangsmaterial findet zerkleinertes Holz, beispielsweise durch Häckseln zerkleinertes, nicht behandeltes Abfallholz der Holzindustrie und/oder Astschnitt und/oder Strauchschnitt etc. Verwendung. Der Rindenanteil soll vorzugsweise nicht mehr als 10 bis 15 vol% betragen. Dieses Ausgangsmaterial wird bevorzugt zu einer Dreiecksmiete aufgeworfen. Diesem Material wird Harnstoff zugesetzt. Dabei kommen etwa 2 kg in Wasser gelöster Harnstoff pro m³ des Ausgangsmaterials zur Anwendung. Die Verwendung einer Harnstoff-Wasserlösung ergibt eine einfache Einbringung durch Berieseln, was gleichzeitig zu einer Befeuchtung führt.

Außerdem wird das oben erwähnte Pilzsubstrat als erster Starter zugesetzt. Die Menge des zugesetzten ersten Starters umfaßt etwa 10 vol%. Die vorstehend ewähnten Komponenten in Form von Ausgangsmaterial, Harnstoff und erstem Starter werden mit Hilfe eines Kompostwenders oder dergleichen intensiv durchmischt und dann etwa einen Tag in Form der Miete liegengelassen. Diese kann insbesondere bei Verfahrensdurchführung im Freien durch ein Kompostschutzvlies abgedeckt werden. Dabei werden Temperatur und Kohlendioxid-Gehalt überwacht. Die oberen Grenzwerte liegen für die Temperatur bei 65° C und für CO₂ bei 8 - 10 vol % der Gase in der Miete. Sofern die Gefahr besteht, daß diese Grenzwerte erreicht oder überschritten werden, wird dem durch Abdecken und zweckmäßig Wenden der Miete entgegengewirkt.

Am zweiten Tag wird der zweite Starter in Form des in vorstehend beschriebener Weise hergestellten Kompoststarters zugesetzt. Hierzu wird das aus dem am Ende der Kompoststarterherstellung getrockneten Material hergestellte Pulver in Wasser angerührt. Dabei wird eine Suspension mit einem Gehalt von etwa 25 g/l hergestellt. Pro m³ des hiermit zu behandelnden Materials, also des aus dem Ausgangsmaterial, Harnstoff und erstem Starter bestehendem bzw. durch Zusammenwirken dieser Komponenten erzeugten Zwischenprodukts, wird ein Liter der genannten Suspension zugesetzt. Pro m³ des zu behandelnden Materials werden also 25 g des zweiten Starters zugesetzt. Die genannte Suspension kann mittels einer Pumpe aufgesprüht und anschließend durch Wenden der vorhandenen Miete eingearbeitet werden. Dabei soll die genannte Suspension jeweils nur in solchen Chargen angerührt werden, die innerhalb von etwa 15 Minuten verarbeitet werden können.

Die mit dem zweiten Starter versehene, zweite Mischung wird längere Zeit in Form einer Dreiecksmiete gelagert. Das Material soll dabei feucht sein und bleiben. Der Feuchtigkeitsgrad kann mittels der Faustprobe ermittelt werden. Ein optimaler Feuchtigkeitsgrad liegt vor, wenn bei der Faustprobe zwischen den Fingern wenig Flüssigkeit, etwa 1 Tropfen, austritt. Die Überprüfung des Feuchtigkeitsgehalts erfolgt von Anfang an. Während der Lagerung werden auch die Temperatur, sowie der Sauerstoffgehalt und der Kohlendioxydgehalt überwacht. Diese Überwachung erfolgt laufend, täglich mindestens einmal. Die oberen Grenzwerte liegen für die Temperatur bei 65° C, und für Kohlendioxid bei 8 -10 vol % bei der in der Miete vorhandenen Gase. Der optimale Wert für den Sauerstoff liegt in der Gegend von 21 vol % der in der Miete vorhandenen Gase. Der untere Grenzwert liegt bei 11 vol % der in der Miete vorhandenen Gase. Sobald sich die ermittelten Werte den genannten Grenzwerten nähern, wird die Miete gewendet und belüftet. Gleichzeitig kann, sofern sich dies bei der Faustprobe als erforderlich erweisen sollte, durch Besprühen mit Wasser befeuchtet werden. Außerhalb der vorstehend genannten Arbeitsgänge kann die Dreiecksmiete mit einem Kompostschutzvlies abgedeckt sein, um Witterungseinflüsse auszuschalten.

Die so gelagerte, aus dem Ausgangsmaterial sowie dem eingebrachten Harnstoff und dem eingebrachten ersten Starter und zweiten Starter bestehende, feuchte Mischung unterliegt einem Fermentations- und Kompostierungsvorgang. Dieser wird vorzugsweise beendet, wenn die oben genannten Grenzwerte eingehalten sind und das Material zudem noch folgende Werte ca. aufweist:
pH-Wert = 7 bis 8; NH₄ [Ammonium]-Gehalt = 2mg/kg; NO₃ [Nitrat]-Gehalt = 100 bis 150 mg/kg; NO₂ [Nitrit]-Gehalt = 0; H₂S [Sulfid]-Gehalt = 0; Wasserstoffgehalt < Sauerstoffgehalt
Gesamtsalzgehalt ≤ 600 mg/kg des vorliegenden Materials.

Diese Werte werden von Zeit zu Zeit gemessen. Wenn sie erreicht sind und die anderen Grenzwert eingehalten sind, kann die Miete aufgelöst werden. Das so erhaltene Material stellt wertvollen, giftfreien Torfersatz dar. Dieses Endprodukt kann entweder zu Briketts oder Ballen gepreßt oder einfach abgesackt werden. Dabei kann es sich in manchen Fällen als zweckmäßig erweisen, wenn vorher die Feuchtigkeit teilweise entzogen wird. Die hierfür erforderliche Trocknung soll zweckmäßig bei etwa 35° C durchgeführt werden.

## Patentansprüche

1. Verfahren zur Herstellung von Torfersatz mit den Schritten, wobei
a) eine erste Mischung hergestellt wird, indem im wesentlichen zerkleinertes Holz als Ausgangsmaterial mit Harnstoff in einem Mengenverhältnis von etwa 2 kg/m³ und 10 Vol% eines ersten Starters versetzt wird, der aus zerkleinertem, mit dem Mycel von vorwiegend Primärzersetzerpilzen durchwachsenem Zellulosematerial besteht und dadurch erhältlich ist, daß man Stroh zerkleinert, anfeuchtet, mit Pilzen in Form von vorwiegend Primärzersetzerpilzen animpft und bei einer Temperatur von 25 °C bis 30 °C und einer Luftfeuchtigkeit von 60 bis 65% hält, bis das Stroh mit Pilzmycel durchwachsen ist,
b) diese erste Mischung eine kürzere Zeit gelagert wird und
c) anschließend in die erste Mischung ein zweiter Starter, der erhältlich ist, indem jeweils etwa 20 Vol% Pferdemist, 50 Vol% Grünmasse, 10 Vol% Falllaub, 10 Vol% Lehm, Urgesteinsmehl in einem Mengenanteil von 5 bis 10 kg/m³ und 10 Vol% des Pilzsubstrats von Schritt a) gemischt und so lange kompostiert werden, bis folgende Werte erreicht sind:
| | | |
|---|---|---|
| NH₄-Gehalt | (Ammonium) | 2 mg/kg |
| NO₃-Gehalt | (Nitrat) | 100 bis 350 mg/kg |
| NO₂-Gehalt | (Nitrit) | 0 |
| H₂S-Gehalt | (Sulfid) | 0 |
| Wasserstoffgehalt | | < Sauerstoffgehalt |
| Gesamtsalzgehalt | | ≤ 600 mg/kg |
| pH-Wert | | 7 bis 8 |
in Form eines Kompoststarters in einem Mengenverhältnis von etwa 25 g/m³ des Ausgangsmaterials eingebracht wird und die so erhaltene zweite Mischung anschließend eine längere Zeit kompostiert wird.

2. Verfahren nach Anspruch 1, wobei der Harnstoff dem Ausgangsmaterial in in Wasser gelöster Form beigegeben wird.

3. Verfahren nach einem der vorhergehenden Ansprüche, wobei das Ausgangsmaterial durch Zerkleinern von unbehandeltem Holz, Astschnitt und/oder Strauchschnitt gewonnen wird.

4. Verfahren nach einem der vorhergehenden Ansprüche, wobei ein Rindenanteil von höchstens 10 bis 15 Vol% vorgesehen ist.

5. Verfahren nach einem der vorhergehenden Ansprüche, wobei zur Lagerung der ersten und oder der zweiten Mischung eine Miete, vorzugsweise eine Dreiecksmiete, aufgesetzt wird, die vorzugsweise mit einem Kompostschutzvlies abgedeckt wird.

6. Verfahren nach einem der vorhergehenden Ansprüche, wobei während der Lagerung der ersten Mischung die Temperatur unterhalb von 65 °C und der CO₂-Gehalt unterhalb von 10 Vol% gehalten werden.

7. Verfahren nach einem der vorhergehenden Ansprüche, wobei das Verfahren nach Schritt c) beendet wird, wenn folgende Werte in der Mischung vorliegen:
| | | |
|---|---|---|
| NH₄-Gehalt | (Ammonium) | 2 mg/kg |
| NO₃-Gehalt | (Nitrat) | 100 bis 350 mg/kg |
| NO₂-Gehalt | (Nitrit) | 0 |
| H₂S-Gehalt | (Sulfid) | 0 |
| Wasserstoffgehalt | | < Sauerstoffgehalt |
| Gesamtsalzgehalt | < | ≤ 600 mg/kg |
| pH-Wert | | 7 bis 8 |

8. Verfahren nach einem der vorhergehenden Ansprüche, wobei das nach Beendigung des Verfahrens vorliegende Produkt gepreßt wird, vorzugsweise in die Form von Briketts.

9. Verfahren nach einem der vorhergehenden Ansprüche, wobei der als zweiter Starter verwendete Kompoststarter enthält:
| | | |
|---|---|---|
| NH₄-Gehalt | (Ammonium) | 2 mg/kg |
| NO₃-Gehalt | (Nitrat) | 100 bis 150 mg/kg |
| NO₂-Gehalt | (Nitrit) | 0 |
| H₂S-Gehalt | (Sulfid) | 0 |
| Wasserstoffgehalt | | < Sauerstoffgehalt |
| Gesamtsalzgehalt | | ≤ 600 mg/kg |
| Sauerstoffgehalt | | > 11 Vol% |
| CO₂-Gehalt | (Kohlendioxid) | weniger als 8 bis 10 Vol% |
| pH-Wert | | 7 bis 8 |
und wobei der zweite Starter als Suspension mit einem Gehalt von 25 g/l in Wasser bereitgestellt wird und in einer Menge von 1 l/m³ zu der ersten Mischung hinzugegeben wird.

10. Verfahren nach einem der vorhergehenden Ansprüche, wobei die Primärzersetzerpilze ausgewählt sind aus Weißfäule, Braunfäule und Moderfäulepilzen.

## Claims

1. A process for manufacturing substitute peat comprising the steps wherein
a) a first mixture is made by substantially mixing crushed wood as a basic material with urea in a quantitative proportion of about 2 kg/m³ and with 10 vol% of a first starter consisting of crushed cellulose material mixed with the mycelium of mainly primary decomposing fungi and being obtainable by crushing straw, wetting it, inoculating it with fungi in form of mainly primary decomposing fungi and maintaining it at a temperature of 25°C to 30°C and a humidity of 60 to 65% until the straw is mixed with fungi mycelium,
a) said first mixture is stored for a shorter time and
b) a second starter in form of a compost starter is mixed with the first mixture in a quantitative proportion of about 25 g/m³ of the basic material, said second starter being obtainable by mixing about 20 vol% of horse dung, 50 vol% of green plant mass, 10 vol% of fallen leaves, 10 vol% of loam, primary rock meal in a quantitative proportion of 5 to 10 kg/m³ and 10 vol% of the fungi substrate of step a) and composting it until the following values are obtained:
| | | |
|---|---|---|
| NH₄ content | (ammonium) | 2 mg/kg |
| NO₃ content | (nitrate) | 100 to 350 mg/kg |
| NO₂ content | (nitrite) | 0 |
| H₂S content | (sulfide) | 0 |
| Hydrogen content | | < oxygen content |
| Total salt content | | ≤600 mg/kg |
| ph-value | | 7 to 8 |
and said second mixture obtained in such a way is composted for a longer time.

2. A process according to claim 1 wherein the urea is added to the basic material dissolved in water.

3. A process according to one of the preceding claims wherein the basic material is obtained by crushing untreated wood, cut branches and/or cut bush.

4. A process according to one of the preceding claims wherein a bark proportion of at least 10 to 15 vol% is provided.

5. A process according to one of the preceding claims wherein for storing said first and or second mixture a heap, preferably a triangular heap, is made being preferably covered by a compost protecting fleece.

6. A process according to one of the preceding claims wherein during storage of the first mixture the temperature is kept below 65°C and the CO₂ content below 10 vol%.

7. A process according to one of the preceding claims wherein the process is terminated after step c) if the following values are obtained in the mixture:
| | | |
|---|---|---|
| NH₄ content | (ammonium) | 2 mg/kg |
| NO₃ content | (nitrate) | 100 to 350 mg/kg |
| NO₂ content | (nitrite) | 0 |
| H₂S content | (sulfide) | 0 |
| Hydrogen content | | < oxygen content |
| Total salt content | | ≤600 mg/kg |
| ph-value | | 7 to 8 |

8. A process according to one of the preceding claims wherein the product obtained after termination of the process is pressed, preferably in form of briquettes.

9. A process according to one of the preceding claims wherein the compost starter used as the second starter comprises:
| | | |
|---|---|---|
| NH₄ content | (ammonium) | 2 mg/kg |
| NO₃ content | (nitrate) | 100 to 150 mg/kg |
| NO₂ content | (nitrite) | 0 |
| H₂S content | (sulfide) | 0 |
| Hydrogen content | | < oxygen content |
| total salt content | | ≤600 mg/kg |
| Oxygen content | | >11 vol% |
| CO₂ content | (carbon dioxide) | less than 8 to 10 vol% |
| ph-value | | 7 to 8 |
and wherein the second starter is provided as a suspension in water having a content of 25 g/l and is added in an amount of 1 l/m³ to the first mixture.

10. A process according to one of the preceding claims wherein the primary decomposing fungi are selected from white pocket, brown rot and decay rot fungi.

## Revendications

1. Procédé de préparation d'un succédané de tourbe avec les étapes suivantes :
a) un premier mélange est produit en mélangeant pour l'essentiel du bois fragmenté en tant que matière de départ avec de l'urée dans un rapport quantitatif d'environ 2 kg/m³ et avec 10 % volumétrique d'un premier initiateur qui se compose de matière de cellulose fragmentée pénétrée par le mycélium de, en premier lieu, champignons primaires de décomposition et qui peut être obtenu par le fait que l'on hache de la paille, la rend humide, l'inocule de champignons sous forme de, en premier lieu, champignons primaires de décomposition et la tient à une température comprise entre 25 °C et 30 °C et à une humidité de l'air comprise entre 60 et 65% jusqu'à ce que le mycélium de champignon ait poussé à travers la paille,
b) ce premier mélange est stocké un temps plus court, et
c) ensuite, un deuxième initiateur qui peut être obtenu en mélangeant respectivement environ 20 % volumétrique de fumier de chevaux, 50 % volumétrique de masse verte, 10 % volumétrique de feuilles tombées, 10 % volumétrique d'argile, des roches primitives pulvérisées en une part quantitative de 5 à 10 kg/m³ et 10 % volumétrique du substrat de champignon de l'étape a) et en les compostant jusqu'à tant que les valeurs suivantes soient atteintes :
| | | |
|---|---|---|
| teneur en NH₄ | (ammonium) | 2 mg/kg |
| teneur en NO₃ | (nitrate) | 100 à 350 mg/kg |
| teneur en NO₂ | (nitrite) | 0 |
| teneur en H₂S | (sulfure) | 0 |
| teneur en hydrogène | | < teneur en oxygène |
| teneur totale en sel | | ≤ 600 mg/kg |
| valeur pH | | 7 à 8 |
est introduit sous forme d'un initiateur de compostage dans un rapport quantitatif d'environ 25 g/m³ de la matière de départ dans le premier mélange, et le deuxième mélange obtenu de cette manière est composté ensuite un temps plus long.

2. Procédé selon la revendication 1, dans lequel l'urée est ajoutée sous une forme dissoute dans l'eau à la matière de départ.

3. Procédé selon l'une des revendications précédentes, dans lequel la matière de départ est obtenue par fragmentation de bois non traité, de coupe de branches et/ou de coupe d'arbustes.

4. Procédé selon l'une des revendications précédentes, dans lequel on prévoit une part d'écorce comprise au maximum entre 10 et 15 % volumétrique.

5. Procédé selon l'une des revendications précédentes, dans lequel, pour le stockage du premier et/ou du deuxième mélange, on dresse une meule, de préférence une meule triangulaire qui, de préférence, est recouverte d'un non-tissé de protection de compost.

6. Procédé selon l'une des revendications précédentes, dans lequel, durant le stockage du premier mélange, la température est maintenue au-dessous de 65 °C et la teneur en CO₂ est maintenue au-dessous de 10 % volumétrique.

7. Procédé selon l'une des revendications précédentes, dans lequel le procédé est terminé après l'étape c) lorsque les valeurs suivantes sont présentes dans le mélange :
| | | |
|---|---|---|
| teneur en NH₄ | (ammonium) | 2 mg/kg |
| teneur en NO₃ | (nitrate) | 100 à 350 mg/kg |
| teneur en NO₂ | (nitrite) | 0 |
| teneur en H₂S | (sulfure) | 0 |
| teneur en hydrogène | | < teneur en oxygène |
| teneur totale en sel | | ≤ 600 mg/kg |
| valeur pH | | 7 à 8 |

8. Procédé selon l'une des revendications précédentes, dans lequel le produit qui est présent après avoir terminé le procédé est pressé, de préférence en briquettes.

9. Procédé selon l'une des revendications précédentes, dans lequel l'initiateur de compostage utilisé en tant que deuxième initiateur comprend :
| | | |
|---|---|---|
| teneur en NH₄ | (ammonium) | 2 mg/kg |
| teneur en NO₃ | (nitrate) | 100 à 150 mg/kg |
| teneur en NO₂ | (nitrite) | 0 |
| teneur en H₂S | (sulfure) | 0 |
| teneur en hydrogène | | < teneur en oxygène |
| teneur totale en sel | | ≤ 600 mg/kg |
| teneur en oxygène | | > 11 % volumétrique |
| teneur en CO₂ | (dioxyde de carbone) | inférieure à 8 - 10% volumétrique |
| valeur pH | | 7 à 8 |
et dans lequel le deuxième initiateur est mis à la disposition en tant que suspension avec une teneur de 25 g/l dans l'eau et est ajouté en une quantité de 1 l/m³ au premier mélange.

10. Procédé selon l'une des revendications précédentes, dans lequel les champignons primaires de décomposition sont choisis dans le groupe comprenant les champignons de pourriture alvéolaire, les champignons de pourriture brune et les champignons de moisissure.
